# EUROPÄISCHE PATENTSCHRIFT

(11) **EP 3 014 207 B1**
(45) Veröffentlichungstag und Bekanntmachung des Hinweises auf die Patenterteilung: **01.04.2020**
(21) Anmeldenummer: 14726964.1
(22) Anmeldetag: 27.05.2014
(51) Int. Cl.: F28D 20/02, F28D 9/00, F28D 21/00

(54) **WÄRMEÜBERTRAGER**
HEAT EXCHANGER
ÉCHANGEUR DE CHALEUR

(30) Priorität: 27.06.2013 DE 102013212427; 02.08.2013 DE 102013215241
(43) Veröffentlichungstag der Anmeldung: 04.05.2016
(73) Patentinhaber: Robert Bosch GmbH, 70442 Stuttgart (DE)
(72) Erfinder: BRANDES, Henrick, 71636 Ludwigsburg (DE); TSCHISMAR, Oliver, 72555 Metzingen (DE); KURRAS, Mathias, 70839 Gerlingen (DE)
(86) Internationale Anmeldenummer: PCT/EP2014/060898
(87) Internationale Veröffentlichungsnummer: WO 2014/206672

(56) Entgegenhaltungen:
- JP-A- H09 138 082
- US-A1- 2009 120 624
- US-A1- 2010 300 140

## Beschreibung

Die Erfindung betrifft einen Wärmeübertrager mit den Merkmalen des Oberbegriffs des Anspruchs 1. US 2009/120624 offenbart einen derartigen Wärmeübertrager.

Der Wärmeübertrager dient der Erwärmung oder Kühlung eines Medienstroms, wobei es sich - in Abhängigkeit von der jeweiligen konkreten Anwendung - um ein Fluid, wie beispielsweise Luft, Wasser oder Öl handeln kann, dem es Wärme zu entziehen oder das es vorzuwärmen gilt.

Wärmetauscher finden regelmäßig in Kraftfahrzeugen Einsatz. Neben mobilen Anwendungen kommen jedoch auch stationäre Anwendungen in Frage.

### Stand der Technik

Ein Wärmeübertrager bzw. Wärmetauscher der vorstehend genannten Art geht beispielhaft aus der Offenlegungsschrift DE 32 00 683 A1 hervor. Offenbart wird ein Wärmetauscher zur Kühlung oder Vorwärmung der Verbrennungsluft einer aufgeladenen Brennkraftmaschine. Der Wärmetauscher besitzt ein mit der Verbrennungsluft in Wärmeaustausch befindliches Arbeitsmedium, das eine hohe Wärmetätigkeit besitzt oder in einem vorgegebenen Arbeitstemperaturbereich als Latentspeicher arbeitet, indem es einen Phasenwechsel oder einen mit einer chemischen Reaktion verbundenen Wärmeumsatz aufweist. Als Arbeitsmedium werden unter anderem Wasser, Stearin, Glyzerin oder Salzhydrat vorgeschlagen.

Ein weiterer Wärmetauscher geht aus der Offenlegungsschrift DE 10 2006 013 503 A1 hervor. Dieser ist als Plattenwärmetauscher ausgebildet und umfasst eine Mehrzahl von Platten, in denen Fluidstrom-Führungskanäle in der Weise ausgebildet sind, dass sich ein im Wesentlicher mäanderförmiger Verlauf des Fluidstroms über die Fläche der jeweiligen Platte ergibt. Zur Verbesserung der Wärmeübertragungsleistung wird ferner vorgeschlagen, dass die Seitenwände der Führungskanäle eine Mehrzahl von Durchbrüchen aufweisen, um eine Verwirbelung des Fluidstroms zu erzielen.

Der vorliegenden Erfindung liegt die Aufgabe zugrunde, einen Wärmeübertrager der vorstehend genannten Art derart weiterzubilden, dass die Wärmeübertragungsleistung weiter optimiert und eine gleichmäßige Temperaturverteilung erreicht wird.

Zur Lösung der Aufgabe wird der Wärmeübertrager mit den Merkmalen des Anspruchs 1 vorgeschlagen. Vorteilhafte Weiterbildungen der Erfindung sind in den Unteransprüchen angegeben.

### Offenbarung der Erfindung

Der zur Erwärmung oder Kühlung eines Medienstroms vorgeschlagene Wärmeübertrager umfasst mehrere Räume zur Aufnahme eines Arbeitsmediums. Die mehreren Räume sind dabei zur Ausbildung mindestens eines Strömungskanals für den zu erwärmenden oder zu kühlenden Medienstrom beabstandet zueinander angeordnet. Erfindungsgemäß sind wenigstens zwei Räume über einen Verbindungskanal oder eine Verbindungsöffnung verbunden, der bzw. die in einem Bereich der Wärmeübertragung angeordnet ist. Der Verbindungskanal verläuft dabei im Wesentlichen in einer Richtung quer zur Strömungsrichtung des Medienstroms durch den Strömungskanal.

Der Bereich der Wärmeübertragung stellt für die vorliegende Erfindung den relevanten Bereich dar. Die Anordnung eines Verbindungskanals oder einer Verbindungsöffnung im Bereich der Wärmeübertragung ermöglicht eine bessere und damit gleichmäßigere Temperaturverteilung innerhalb des Arbeitsmediums, das in den jeweils verbundenen Räumen aufgenommen ist. Denn in diesem Fall erfolgt die Temperaturverteilung über das Arbeitsmedium selbst und nicht mittelbar über den Medienstrom, der zwischen den Räumen geführt ist. Eine optimale Temperaturverteilung verbessert zudem die Wärmeübertragungsleistung.

Der Verbindungskanal schafft ferner ein zusätzliches Volumen, welches das Arbeitsmedium enthält und in Wärmeaustausch mit dem zu erwärmenden oder zu kühlenden Medienstrom steht. Denn der Verbindungskanal ist vorzugsweise quer durch den Strömungskanal geführt, welcher von dem Medienstrom durchströmt wird. Der zu erwärmende oder zu kühlende Medienstrom wird demnach unmittelbar an dem Verbindungskanal vorbeigeführt. Damit vergrößert sich die Wärmeübertragungsfläche, was wiederum mit einer Optimierung der Wärmeübertragungsleistung einhergeht.

Gemäß einer bevorzugten Ausgestaltung der Erfindung mündet der Verbindungskanal im Wesentlichen mittig in Bezug auf eine Länge L und/oder eine Breite B eines Raums in diesen Raum. Die Länge L und die Breite B definieren dabei vorzugsweise den Bereich der Wärmeübertragung, so dass der Verbindungskanal vorzugsweise mittig in Bezug auf den Bereich der Wärmeübertragung angeordnet ist. Vom Mündungsbereich des Verbindungskanals aus kann sich auf diese Weise die Temperatur gleichmäßig in alle Richtungen verteilen.

Als weiterbildende Maßnahme wird vorgeschlagen, dass mehrere Verbindungskanäle vorgesehen sind, die im Wesentlichen parallel und/oder in gleichem Abstand zueinander angeordnet sind. Denn mit der Zahl der Verbindungskanäle steigt auch deren homogenisierende Wirkung in Bezug auf die Temperatur des in den Räumen aufgenommenen Arbeitsmediums.

Sofern mehrere Verbindungskanäle vorgesehen sind, sind diese bevorzugt derart angeordnet, dass der Abstand zwischen zwei benachbarten Verbindungskanälen gleich groß wie oder kleiner als der Abstand der Verbindungskanäle zu wenigstens einer seitlichen Begrenzungswand eines Gehäuses des Wärmeübertragers ist. D. h., dass die Verbindungskanäle einen gewissen Abstand zu einem Randbereich einhalten, der vorliegend durch eine Begrenzungswand eines Gehäuses gebildet wird. Dadurch ist sichergestellt, dass die Verbindungskanäle vorrangig in der Mitte des Bereichs der Wärmeübertragung zu liegen kommen.

Da die Verbindungskanäle im Wesentlichen quer zur Strömungsrichtung des Medienstroms durch den Strömungskanal verlaufen, können sie derart angeordnet werden, dass sie eine Art Schikane zur Lenkung des Medienstroms ausbilden. Vorzugsweise sind mehrere Verbindungskanäle seitlich versetzt zueinander angeordnet, so dass eine Umlenkung des Medienstroms bewirkt wird, die vorzugsweise zu einer mäanderförmigen Durchströmung führt.

Erfindungsgemäß wird der Strömungskanal von Platten begrenzt, die den Strömungskanal von den Räumen trennen und vorzugsweise parallel angeordnet sind. Der Wärmeübertrager kann demnach als Plattenwärmeübertrager ausgebildet sein. Plattenwärmeübertrager sind an sich aus dem Stand der Technik bekannt. Die Flächenabmessungen der Platten - ggf. abzüglich eines Randbereichs - definieren dabei regelmäßig den Bereich der Wärmeübertragung. Zwischen den Platten werden Strömungskanäle ausgebildet, die gerade oder gewunden verlaufen können, indem beispielsweise Leitbleche oder dergleichen in einem Strömungskanal angeordnet werden. Ferner können die Platten im Bereich ihrer Oberflächen profiliert sein, um die Wärmeübertragungsfläche zu vergrößern. Diese grundsätzlich bekannten Maßnahmen können auch bei dem erfindungsgemäßen Wärmeübertrager vorgesehen werden. Es gilt lediglich sicherzustellen, dass wenigstens ein Verbindungskanal zwischen zwei sich am Strömungskanal gegenüberliegenden Platten zur Verbindung der jeweils dahinter liegenden Räume vorgesehen ist, um eine gleichmäßige Temperaturverteilung und damit eine Homogenisierung der das Arbeitsmedium aufnehmenden Volumina zu fördern.

Erfindungsgemäß mündet der Verbindungskanal oder die Verbindungsöffnung im Bereich eines Flächenschwerpunkts wenigstens einer Platte in einen Raum. Auf diese Weise kommt der Verbindungskanal wiederum im Wesentlichen mittig in Bezug auf den Bereich der Wärmeübertragung zu liegen.
Eine weitere weiterbildende Maßnahme sieht vor, dass mindestens zwei Platten über einen Flächenabschnitt in direkten Flächenkontakt miteinander stehen. Bevorzugt sind die Platten innerhalb dieses Flächenabschnitts stoffschlüssig verbunden und der Verbindungskanal bzw. die Verbindungsöffnung mündet innerhalb des Flächenabschnitts in einen Raum, in dem das Arbeitsmedium aufgenommen ist.
Gemäß einer bevorzugten Ausführungsform der Erfindung besitzt der Strömungskanal eine Höhe von 0,3 mm bis 3 mm, vorzugsweise von 0,8 mm bis 1,5 mm.
Alternativ oder ergänzend wird vorgeschlagen, dass wenigstens ein Raum zur Aufnahme des Arbeitsmediums eine Höhe von 1 mm bis 10 mm, vorzugsweise von 3 mm bis 5 mm, besitzt.

Eine Platte zur Begrenzung des Strömungskanals besitzt vorzugsweise eine Dicke von 0,1 mm bis 1 mm, weiterhin vorzugsweise von 0,2 mm bis 0,5 mm.

Erfindungsgemäß ist das Arbeitsmedium ein Phasenwechselmaterial.

Ein Phasenwechselmaterial zeichnet sich dadurch aus, dass es durch eine Phasenwechsel bzw. eine Zustandsänderung, wie beispielsweise von flüssig nach fest, Energie zu speichern und bei einem erneuten Phasenwechsel in Form von Wärme wieder abzugeben vermag. Das Arbeitsmedium bildet demnach zugleich ein Speichermaterial aus. Bei Einsatz eines Phasenwechselmaterials als Arbeitsmedium in einem erfindungsgemäßen Wärmeübertrager wirkt sich der wenigstens eine Verbindungskanal positiv auf einen gleichmäßigen Phasenwechsel des Arbeitsmediums aus. Denn der wenigstens eine Verbindungskanal fördert die Ausbreitung einer Phasenwechselfront, so dass diese beschleunigt wird. Dies trägt zur Homogenisierung der das Arbeitsmedium aufnehmenden Volumina bei. Dies hat zur Folge, dass ferner die Zahl der Phasenwechselstarteinrichtungen reduziert werden kann, die den einzelnen Volumina bzw. Räumen zugeordnet sind, in denen das Phasenwechselmaterial gespeichert ist.
Eine bevorzugte Ausführungsform der Erfindung wird nachfolgend anhand der beigefügten Zeichnungen näher beschrieben. Diese zeigen:
Figur 1 eine schematische Schnittansicht durch einen erfindungsgemäßen Wärmeübertrager gemäß einer bevorzugten Ausführungsform,
Figur 2 eine schematische perspektivische Darstellung eines bekannten Plattenwärmeübertragers,
Figur 3 eine perspektivische Darstellung der Platten eines bekannten Plattenwärmeübertragers,
Figur 4 eine schematische Schnittdarstellung durch einen erfindungsgemäßen Wärmeübertragers gemäß einer weiteren bevorzugten Ausführungsform und
Figur 5 eine perspektivische Darstellung zweier Platten des Wärmeübertragers der Figur 4.

### Ausführliche Beschreibung der Zeichnungen

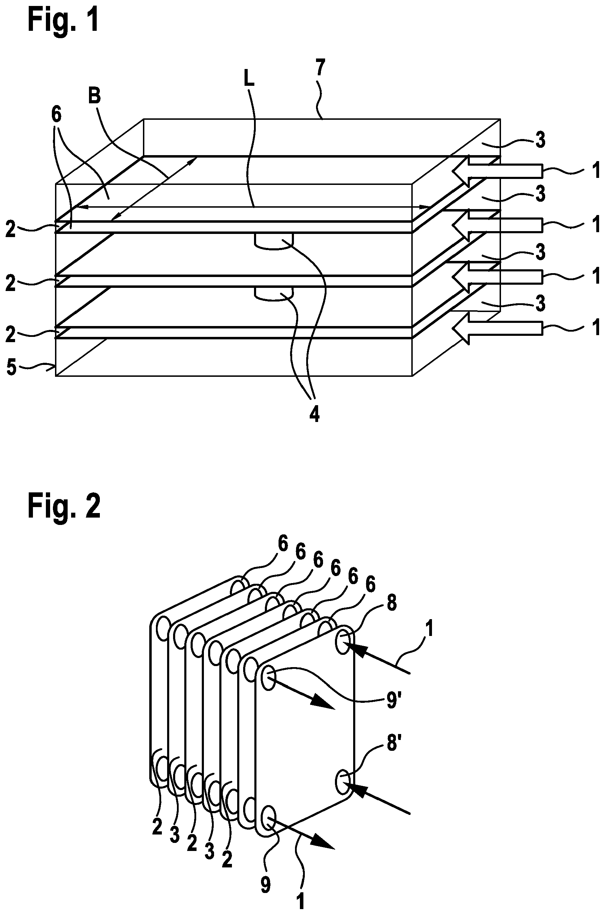

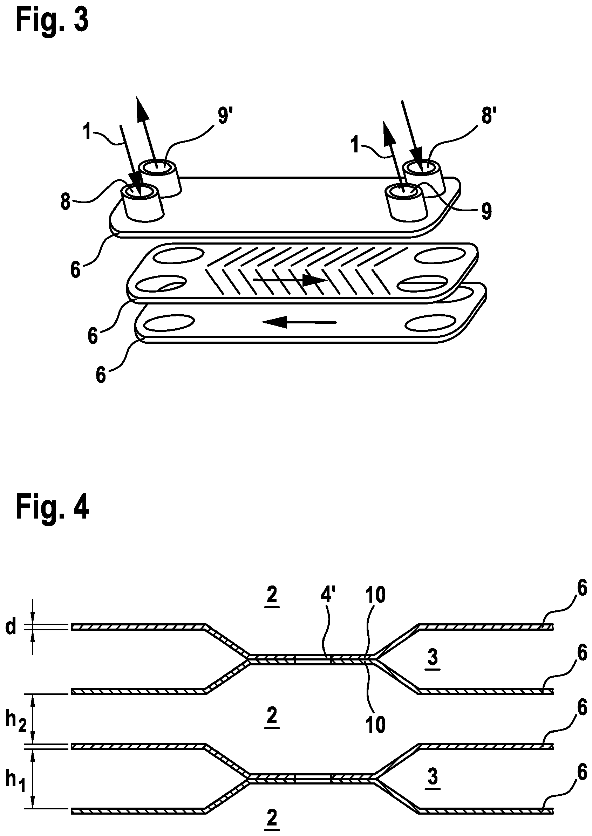

Anhand der Figuren 2 und 3 wird zunächst der herkömmliche Aufbau eines an sich bekannten Plattenwärmeübertragers beschrieben.

Der Figur 2 sind mehrere Platten 6 in einer gestapelten Anordnung zu entnehmen, wobei die mehreren Platten 6 zueinander beabstandet sind. Zwischen den Platten 6 werden auf diese Weise Räume 2 zur Aufnahme eines Arbeitsmediums sowie Strömungskanäle 3 ausgebildet, welche im Betrieb des Wärmeübertragers jeweils von einem Medienstrom 1 durchströmt werden. Die Räume 2 und die Strömungskanäle 3 wechseln sich ab, so dass das in einem Raum 2 befindliche Arbeitsmedium über die den Raum 2 begrenzenden Platten 6 in einen Wärmeaustausch mit dem Medienstrom 1 des jeweils angrenzenden Strömungskanals 3 bringbar ist. Um die Wärmeübertragungsfläche der Platten 6 zu erhöhen, können diese - wie in der Figur 3 dargestellt - ein- oder beidseitig eine profilierte Oberfläche besitzen.

In den Randbereichen sind die Platten 6 in der Regel verbunden (nicht dargestellt). Ferner weist wenigstens eine Platte 6 einen Einlass 8 und einen Auslass 9 für den zu erwärmenden oder zu kühlenden Medienstrom 1 auf. Ein weitere Einlass 8' sowie ein weiterer Auslass 9' können für das Arbeitsmedium vorgesehen sein.

Der in der Figur 1 dargestellte erfindungsgemäße Wärmeübertrager ist ebenfalls als Plattenwärmeübertrager ausgeführt und umfasst mehrere Platten 6 in gestapelter Anordnung, wobei zwischen den Platten 6 abwechselnd Räume 2 zur Aufnahme eines Arbeitsmediums, vorliegend eines Phasenwechselmaterials, und Strömungskanäle 3 für einen Medienstrom 1 ausgebildet werden, den es zu erwärmen oder zu kühlen gilt. Bei dem zu erwärmenden bzw. zu kühlenden Medienstrom 1 handelt es sich vorliegend um einen Ölstrom. Die Platten 6 sind in einem Gehäuse 7 mit seitlichen Begrenzungswänden 5 aufgenommen, welche eine Abdichtung der Räume 2 gegenüber den Strömungskanälen 3 bewirken, so dass es sich um ein geschlossenes System handelt.

Im dargestellten Ausführungsbeispiel sind jeweils zwei Räume 2 über einen Verbindungskanal 4 miteinander verbunden, so dass ein zusammenhängendes Volumen für das Arbeitsmedium geschaffen wird. Der Verbindungskanal 4 ist jeweils mittig in Bezug auf eine Länge L und eine Breite B der Räume 2 angeordnet. Die Länge L und die Breite B der Räume 2 entsprechen der Länge und der Breite der Platten 6, so dass hierüber der Bereich der Wärmeübertragung definiert wird. Die Anordnung der Verbindungskanäle 4 erfolgt demnach jeweils im Flächenschwerpunkt der Platten 6 bzw. in einem zentralen Bereich der Wärmeübertragung. Diese Maßnahme gewährleistet eine gleichmäßige Temperaturverteilung und eine schnelle Ausbreitung der Phasenwechselfront innerhalb des Arbeitsmediums.

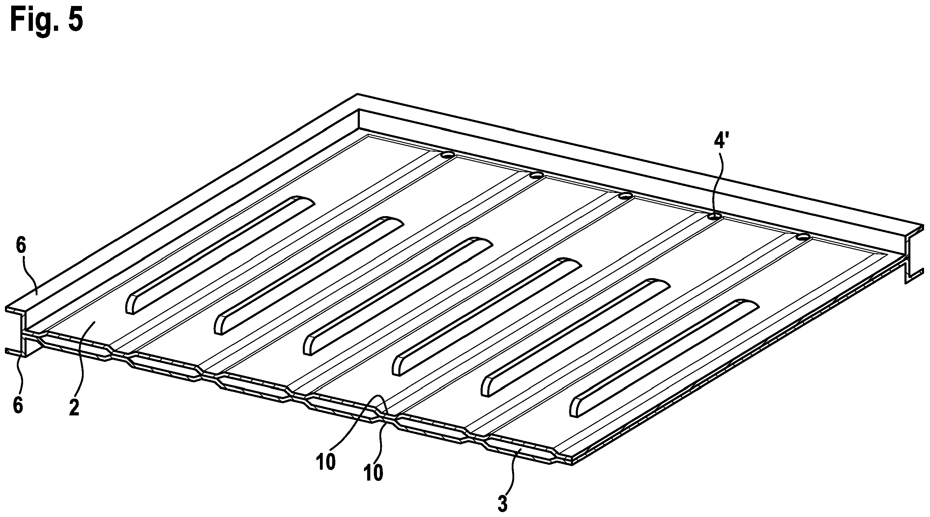

Eine weitere bevorzugte Ausführungsform eines erfindungsgemäßen Wärmeübertragers ist in den Figuren 4 und 5 dargestellt. Die Platten 6 weisen angehobene bzw. abgesenkte Flächenabschnitte 10 auf, über welche zwei benachbarte Platte 6 unmittelbar in Kontakt miteinander stehen. Im Bereich dieser Flächenabschnitte 10 sind die Platten zudem stoffschlüssig verbunden. Ferner ist im Bereich der Flächenabschnitte 10 eine Verbindungsöffnung 4' ausgebildet, über welche zwei Räume 2, in denen das Arbeitsmedium aufgenommen ist, in Verbindung stehen. Die Räume 2 besitzen jeweils eine Höhe h₂ und die Strömungskanäle 3 eine Höhe h₁. Die Räume 2 werden von den Strömungskanälen 3 jeweils durch eine Platte 6 getrennt, die eine Dicke d besitzt.

## Patentansprüche

1. Wärmeübertrager zur Erwärmung oder Kühlung eines Medienstroms (1), umfassend mehrere Räume (2) zur Aufnahme eines Arbeitsmediums, insbesondere eines Phasenwechselmaterials, die zur Ausbildung mindestens eines Strömungskanals (3) für den zu erwärmenden oder zu kühlenden Medienstrom (1) beabstandet zueinander angeordnet sind,
wobei wenigstens zwei Räume (2) über einen Verbindungskanal (4) oder eine Verbindungsöffnung (4') verbunden sind, der bzw. die in einem Bereich der Wärmeübertragung angeordnet ist, und wobei der Verbindungskanal (4) im Wesentlichen in einer Richtung quer zur Strömungsrichtung des Medienstroms durch den mindestens einen Strömungskanal (3) verläuft, wobei der mindestens eine Strömungskanal (3) von Platten (6) begrenzt wird, die den mindestens einen Strömungskanal (3) von den Räumen (2) trennen und vorzugsweise parallel angeordnet sind, **dadurch gekennzeichnet, dass** der Verbindungskanal (4) oder die Verbindungsöffnung (4') im Bereich eines Flächenschwerpunkts wenigstens einer Platte (6) in einen Raum (2) mündet.

2. Wärmeübertrager nach Anspruch 1,
**dadurch gekennzeichnet, dass** der Verbindungskanal (4) im Wesentlichen mittig in Bezug auf eine Länge (L) und/oder eine Breite (B) eines Raums (2) in den Raum (2) mündet.

3. Wärmeübertrager nach Anspruch 1 oder 2,
**dadurch gekennzeichnet, dass** mehrere Verbindungskanäle (4) vorgesehen sind, die im Wesentlichen parallel und/oder in gleichem Abstand zueinander angeordnet sind.

4. Wärmeübertrager nach einem der vorhergehenden Ansprüche,
**dadurch gekennzeichnet, dass** der Abstand zwischen zwei benachbarten Verbindungskanälen (4) gleich groß wie oder kleiner als der Abstand der Verbindungskanäle (4) zu wenigstens einer seitlichen Begrenzungswand (5) eines Gehäuses (7) des Wärmeübertragers ist.

5. Wärmeübertrager nach einem der vorhergehenden Ansprüche,
**dadurch gekennzeichnet, dass** mehrere Verbindungskanäle (4) zur Umlenkung des Medienstroms seitlich versetzt zueinander angeordnet sind.

6. Wärmeübertrager nach einem der vorhergehenden Ansprüche,
**dadurch gekennzeichnet, dass** mindestens zwei Platten (6) über einen Flächenabschnitt (10) in direkten Flächenkontakt miteinander stehen.

7. Wärmeübertrager nach Anspruch 6,
**dadurch gekennzeichnet, dass** innerhalb des Flächenabschnitts (10) die Platten (6) stoffschlüssig verbunden sind und der Verbindungskanal (4) oder die Verbindungsöffnung (4') innerhalb des Flächenabschnitts (10) in einen Raum (2) mündet.

8. Wärmeübertrager nach einem der vorhergehenden Ansprüche,
**dadurch gekennzeichnet, dass** der mindestens eine Strömungskanal (3) eine Höhe (h₁) von 0,3 mm bis 3 mm, vorzugsweise von 0,8 mm bis 1,5 mm, besitzt.

9. Wärmeübertrager nach einem der vorhergehenden Ansprüche,
**dadurch gekennzeichnet, dass** wenigstens ein Raum (2) eine Höhe (h₂) von 1 mm bis 10 mm, vorzugsweise von 3 mm bis 5 mm, besitzt.

10. Wärmeübertrager nach einem der vorherigen Ansprüche,
**dadurch gekennzeichnet, dass** wenigstens eine Platte (6) eine Dicke (d) von 0,1 mm bis 1 mm, vorzugsweise von 0,2 mm bis 0,5 mm, besitzt.

## Claims

1. Heat exchanger for heating or cooling a medium stream (1), comprising multiple spaces (2) for receiving a working medium, in particular a phase-change material, which spaces, for forming at least one flow channel (3) for the medium stream (1) to be heated or to be cooled, are arranged spaced apart from one another, wherein at least two spaces (2) are connected via a connection channel (4) or a connection opening (4'), which connection channel or connection opening is arranged in a region of the heat exchange, and wherein the connection channel (4) extends through the at least one flow channel (3) substantially in a direction perpendicular to the flow direction of the medium stream, wherein the at least one flow channel (3) is delimited by plates (6) which separate the at least one flow channel (3) from the spaces (2) and which are preferably arranged in a parallel manner,
**characterized in that** the connection channel (4) or the connection opening (4'), in the region of a surface centre of gravity of at least one plate (6), opens into a space (2).

2. Heat exchanger according to Claim 1,
**characterized in that** the connection channel (4), with respect to a length (L) and/or a width (B) of a space (2), opens into the space (2) substantially centrally.

3. Heat exchanger according to Claim 1 or 2,
**characterized in that** provision is made of multiple connection channels (4), which are arranged substantially parallel and/or with an equal spacing to one another.

4. Heat exchanger according to one of the preceding claims,
**characterized in that** the spacing between two adjacent connection channels (4) is equal in size to or smaller than the spacing of the connection channels (4) to at least one lateral delimiting wall (5) of a housing (7) of the heat exchanger.

5. Heat exchanger according to one of the preceding claims,
**characterized in that** multiple connection channels (4), for diverting the medium stream, are arranged laterally offset from one another.

6. Heat exchanger according to one of the preceding claims,
**characterized in that** at least two plates (6) are in direct surface contact with one another via a surface portion (10).

7. Heat exchanger according to Claim 6,
**characterized in that**, within the surface portion (10), the plates (6) are connected in a materially bonded manner, and the connection channel (4) or the connection opening (4'), within the surface portion (10), opens into a space (2).

8. Heat exchanger according to one of the preceding claims,
**characterized in that** the at least one flow channel (3) has a height (h₁) of 0.3 mm to 3 mm, preferably of 0.8 mm to 1.5 mm.

9. Heat exchanger according to one of the preceding claims,
**characterized in that** at least one space (2) has a height (h₂) of 1 mm to 10 mm, preferably of 3 mm to 5 mm.

10. Heat exchanger according to one of the preceding claims,
**characterized in that** at least one plate (6) has a thickness (d) of 0.1 mm to 1 mm, preferably of 0.2 mm to 0.5 mm.

## Revendications

1. Échangeur de chaleur pour chauffer ou refroidir un flux de fluide (1), comprenant plusieurs espaces (2) pour recevoir un fluide de travail, en particulier un matériau à changement de phase, qui sont disposés à distance les uns des autres pour réaliser au moins un canal d'écoulement (3) pour le flux de fluide (1) à chauffer ou refroidir,
au moins deux espaces (2) étant connectés par le biais d'un canal de liaison (4) ou d'une ouverture de liaison (4'), qui est disposé(e) dans une région d'échange de chaleur, et le canal de liaison (4) s'étendant essentiellement dans une direction transversale à la direction d'écoulement du flux de fluide à travers l'au moins un canal d'écoulement (3), l'au moins un canal d'écoulement (3) étant limité par des plaques (6) qui séparent l'au moins un canal d'écoulement (3) des espaces (2) et qui sont disposées de préférence parallèlement,
**caractérisé en ce que** le canal de liaison (4) ou l'ouverture de liaison (4') débouche dans un espace (2) dans la région d'un centre de gravité de surface d'au moins une plaque (6).

2. Échangeur de chaleur selon la revendication 1,
**caractérisé en ce que** le canal de liaison (4) débouche dans un espace (2) essentiellement centralement par rapport à une longueur (L) et/ou largeur (B) de l'espace (2).

3. Échangeur de chaleur selon la revendication 1 ou 2,
**caractérisé en ce que** plusieurs canaux de liaison (4) sont prévus, lesquels sont disposés essentiellement parallèlement et/ou à égale distance les uns des autres.

4. Échangeur de chaleur selon l'une quelconque des revendications précédentes,
**caractérisé en ce que** la distance entre deux canaux de liaison adjacents (4) est inférieure ou égale à la distance des canaux de liaison (4) par rapport à au moins une paroi de limitation latérale (5) d'un boîtier (7) de l'échangeur de chaleur.

5. Échangeur de chaleur selon l'une quelconque des revendications précédentes,
**caractérisé en ce que** plusieurs canaux de liaison (4) sont disposés de manière décalée latéralement les uns par rapport aux autres pour dévier le flux de fluide.

6. Échangeur de chaleur selon l'une quelconque des revendications précédentes,
**caractérisé en ce qu'**au moins deux plaques (6) sont en contact de surface direct les unes avec les autres par le biais d'une portion de surface (10) .

7. Échangeur de chaleur selon la revendication 6,
**caractérisé en ce qu'**à l'intérieur de la portion de surface (10), les plaques (6) sont connectées par liaison de matière et le canal de liaison (4) ou l'ouverture de liaison (4') débouche à l'intérieur de la portion de surface (10) dans un espace (2).

8. Échangeur de chaleur selon l'une quelconque des revendications précédentes,
**caractérisé en ce que** l'au moins un canal d'écoulement (3) présente une hauteur (h₁) de 0,3 mm à 3 mm, de préférence de 0,8 mm à 1,5 mm.

9. Échangeur de chaleur selon l'une quelconque des revendications précédentes,
**caractérisé en ce qu'**au moins un espace (2) possède une hauteur (h₂) de 1 mm à 10 mm, de préférence de 3 mm à 5 mm.

10. Échangeur de chaleur selon l'une quelconque des revendications précédentes,
**caractérisé en ce qu'**au moins une plaque (6) présente une épaisseur (d) de 0,1 mm à 1 mm, de préférence de 0,2 mm à 0,5 mm.
